(19) Europäisches Patentamt
European Patent Office
Office européen des brevets

(11) **EP 3 933 698 A1**

(12) **EUROPEAN PATENT APPLICATION**

(43) Date of publication:
**05.01.2022 Bulletin 2022/01**

(51) Int Cl.:
**G06N 3/00** *(2006.01)*      **G06N 3/04** *(2006.01)*
**B25J 9/00** *(2006.01)*

(21) Application number: **20183933.9**

(22) Date of filing: **03.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Honda Research Institute Europe
GmbH
63073 Offenbach/Main (DE)**

(72) Inventor: **Manschitz, Simon
63073 Offenbach/Main (DE)**

(74) Representative: **Beder, Jens
Mitscherlich PartmbB
Patent- und Rechtsanwälte
Sonnenstraße 33
80331 München (DE)**

(54) **METHOD AND CONTROL UNIT FOR GENERATING STYLIZED MOTION OF AN OBJECT, SUCH AS A ROBOT OR A VIRTUAL AVATAR**

(57)    The invention regards a method for controlling motion of an object, such as a robot or virtual avatar. The method comprises the steps of receiving an input motion information describing a current motion of a current motion type and current style, and a target style for a target motion of the current motion type and the target style, transforming, using a first feedforward neural network, FFNN, of a style statistic predictor (1), the input motion information to an output motion information on the basis of the target style, wherein the output motion information describes the target motion, and controlling the motion of the object on the basis of the output motion information, such that the motion type of the motion of the object corresponds to the current motion type and the style of the motion of the object corresponds to the target style. the invention further regards a control unit for controlling the motion of an object that is configured to perform the method according to the inventive method as well as a robot including such a control unit and respective computer program.

Figure 1

**Description**

The present disclosure relates to a method and a control unit for controlling motion of an object, such as a robot or virtual avatar, wherein the control unit is configured to perform such a method. The present disclosure further relates to a robot with such a control unit that is configured to control motion of the robot, and to a computer program comprising program code for performing, when implemented on a processor, such a method.

Given a current motion of an object, such as a robot or a virtual avatar, a stylization method may be used for modifying the style of the current motion by transforming the style of the current motion from a current style to a target style. For example, a neutral walking motion (i.e. the motion type of the current motion is "walking" and the current style is "neutral") maybe transformed to a happy walking motion (i.e. the target style of the current motion of motion type "walking" is "happy"). Transforming the style of a current motion from a current style to a target style may also be described as stylizing the current motion to a target style.

Current state-of-the-art stylization approaches suffer from various disadvantages. The motion type of a current motion of an object, such as a robot or virtual avatar, to be stylized to a target style has to be very similar to the motion type of data used as a reference for the stylization in order to produce meaningful stylization results. Further, a user wanting to stylize the current motion of the object has to provide examples in different styles for the motion type of the current motion to be stylized. For example, for stylizing a current motion of the motion type "walking", the user needs to provide examples of the current motion type in different styles, i.e. examples of the walking motion in different walking styles. A stylization of the current motion may then be performed to any style of the different styles.

Moreover, current state-of-the-art stylization approaches are usually applied to virtual avatars, only. Therefore, they cannot be directly used for controlling the motion of a robot, because the physical limitations of the robot have to be taken into account when generating motion of the robot.

Therefore, it is an objective of the present invention to provide a method for controlling motion of an object, such a robot or virtual avatar, that overcomes at least one of the above described disadvantages.

These and other objectives, which become apparent upon reading the following description, are solved by the subject-matter of the independent claim. The dependent claims refer to advantageous implementations of the embodiments of the invention.

The first aspect of the present disclosure provides a method for controlling motion of an object, such as a robot or virtual avatar. The method comprises the steps of

- receiving input motion information describing a current motion of a current motion type and current style, and receiving a target style for a target motion of the current motion type and the target style,

- transforming, using a first feedforward neural network (FFNN) of a style statistic predictor, the input motion information to an output motion information on the basis of the target style, wherein the output motion information describes the target motion, and

- controlling the motion of the object on the basis of the output motion information, such that the motion type of the motion of the object corresponds to the current motion type and the style of the motion of the object corresponds to the target style.

In other words, the first aspect of the present disclosure proposes a method that allows transforming, using a first FFNN of a style statistic predictor, the current style of a current motion of an object, such as a robot or virtual avatar, to a target style without changing the motion type of the current motion.

For example, in case the current motion type is "walking" and, thus, the current motion of the object corresponds to the object walking, the current style "happy" may be changed to the target style "sad". In case the object is a robot, motion of the robot according to the motion type e.g. "walking" and style e.g. "happy" means that the robot walks happily. In other words, the robot is walking in such a way that the robot appears to be happy. When the style of the robot's motion changes to the target style of e.g. "sad" without changing the motion type "walking", the robot adapts its way of walking from walking happily to walking sadly. That is, the robot is walking in such a way that the robot appears to be sad. The same applies to the object being a virtual avatar.

As a result of using the first FFNN of the style statistic predictor, the above described disadvantage of the motion type of the current motion of the object to be stylized to a target style needing to be very similar to the motion type of data used as a reference for the stylization is overcome. Moreover, the above-described disadvantage of a user needing to provide examples in all different styles (including the target style) for the motion type of the current motion is overcome. Namely, the first FFNN of the style statistic predictor can predict how an input motion information describing a current motion type and a current style has to be transformed to an output motion information describing the current motion type in a target style. The first FFNN does not need to know the current style of the input motion information. The current motion type and current style of the input motion information also do not need to be similar to the training data used for training the first FFNN. Thus, the method according to the first aspect is advantageous, because the current style of a current motion of arbitrary motion type may be transformed into different styles without having examples of motion information of the same motion type in the different styles.

Therefore, the method according to the first aspect has several advantages:

The motion repertoire of a robot or virtual avatar may be enlarged. That is, the number of different styles that a motion of a robot or virtual avatar may be stylized to may be enlarged. Namely, there is no need for a user to provide examples in the different style for each motion type. This leads to more expressive robots and virtual avatars. As a result, a robot or virtual avatar may be able to communicate its intention or information to a person by changing the style of a current motion. For example, a current motion changing from the current style "neutral" to the style "angry" maybe used to communicate danger. Further, a robot or virtual avatar may be easily personalized by a user, which leads to a better user-experience. Furthermore, a robot or virtual avatar may mirror the emotional state of a person (human), making him or her feel more comfortable or letting the robot respectively virtual avatar appear more caring.

As a result, an engineer does not have to create the motion information in different styles for different motion types in a time-consuming process. In contrast, the engineer only has to create motion information of a motion type once (e.g. a single waving motion, a single walking motion, ...). The method of the first aspect may be used to stylize the motion information. That is, the method of the first aspect may be used for transforming the motion information of a motion type to an output motion information of the same motion type and a target style.

Moreover, using the method of the first aspect allows automatically changing the current style of a current motion of a robot or virtual avatar according to a current motion type and a current style to a different target style. In other words, input motion information describing a current motion of a current motion type and current style may be automatically transformed on the basis of a target style to an output motion information by using the first FFNN of the style statistic predictor, wherein the output motion information describes motion (target motion) of the current motion type and the target style. Thus, the method of the first aspect allows for an automatic transformation of the style of a motion to a target style. The automatically transformed output motion information maybe used for motion editing. That is, in case the motion of the robot or virtual avatar being controlled on the basis of the output motion information does not match the expectations of an engineer with regard to the motion type and/or target style, the output motion information may serve as a starting point for editing the motion manually.

Therefore, the method of the first aspect maybe used as a design tool during the development process of a robot or virtual avatar as well as for controlling motion of the robot or the virtual avatar. In particular, the method of the first aspect maybe used for controlling motion of a robot or virtual avatar such that the robot or virtual avatar appears more humanlike.

In particular, the method for controlling motion of the object maybe referred to as a stylization method for stylization of a current motion of the object to a target style.

The robot may be a humanoid robot. The virtual avatar may be a humanoid virtual avatar. The virtual avatar may be referred to as "animated character".

The style statistic predictor and the first FFNN may each be implemented by hardware and/or software.

The terms "movement" and "behavior" maybe used as synonyms for the term "motion". The term "motion category" and "content of a motion" may be used as synonyms for the term "motion type". The term "motion type" may be abbreviated by the term "type". The term "style" may be referred to as "motion style".

Examples of a motion type of a robot or virtual avatar, such as a humanoid robot or virtual avatar, comprise walking, dancing, running, jumping, performing facial expressions, performing gestures etc.

Examples of a style of a motion of a robot or virtual avatar comprise happy, sad, angry, elderly, young etc.

The style of a motion may be referred to as an emotional state, such as being sad, being happy, being angry etc., or a characteristic of a human, such as being young, being elderly etc., that is apparent to a person, when the motion is performed according to the style.

The input motion information may comprise or correspond to data, in particular xyz-positions respectively xyz-positions, for each degree of freedom of the object to be controlled. A xyz-position is defined by its xyz-coordinates. Thus, a xyz-position may also be referred to by the respective xyz-coordinates. The terms "3-dimensional position" and "position in a 3-dimensional space" maybe used as synonyms for the term "xyz-position".

According to an embodiment, the input motion information may comprise data of a matrix $X_{1:N}$ of a time-series of length N, wherein the data are xyz-positions for the degrees of freedom of the object to be controlled, wherein the matrix X is of dimension ($k \times 3$) and k is the number of degrees of freedom of the object. That is, for each time point t = 1 to N, the matrix $X_{1:N}$ comprises xyz-positions for the degrees of freedom of the robot or virtual avatar.

A degree of freedom of the object may be

-    a part of the object and/or

-    possible basic motion of one or more parts of the object

that maybe controlled on its own for generating a motion of the object according to a motion type and motion style.

Therefore, a degree of freedom of a robot or a virtual avatar may be

-    a part of the robot or virtual avatar (e.g. robot arm with 6 joints as 6 degrees of freedom, wherein each joint is a part of the robot's or virtual avatar's body), and/or

- possible basic motion of one or more parts of the robot or virtual avatar (e.g. robot with eye tilt, eye roll, eye pop, body lean forward and backward and base rotation as 5 degrees of freedom)

that may be controlled on its own for generating a motion of the robot or virtual avatar according to a motion type and motion style.

The first FFNN may also be referred to as a "deep neural network".

The first FFNN is configured to transform input motion information of arbitrary motion type and arbitrary style to output motion information of the same motion type and a target style out of a plurality of different styles without having examples of the same motion type in the different styles. Therefore, the first FFNN is configured to transform input motion information of an arbitrary motion type and arbitrary style to output motion information of the same motion type and a different style corresponding to a target style.

According to an implementation form of the first aspect, the first FFNN is a probabilistic neural network (PNN). Such a probabilistic neural network may also be referred to as "deep probabilistic neural network".

According to an implementation form of the first aspect, the method comprises the steps of

- generating, using a first motion statistic module, an input statistic on the basis of the input motion information, wherein the input statistic is indicative of the current motion type and current style,

- generating, using the first FFNN, a target statistic on the basis of the input statistic and the target style, wherein the target statistic is indicative of the current motion type and the target style, and

- transforming the input motion information to the output motion information on the basis of the input statistic and the target statistic.

In other words, the first FFNN of the style statistic predictor may be configured to map the input statistic, which is generated by the first motion statistic module on the basis of the input motion information, and the target style to a target statistic. The input motion information can be transformed to the output motion information on the basis of the input statistic and the target statistic.

The first motion statistic module may be implemented by hardware and/or software.

The input statistic is a statistic about the current motion and, thus, about the current motion type and current style.

The input statistic may be the mean and/or variance of the data of the input motion information. Alternatively or additionally, the input statistic may be defined as the Gram matrix of the data. In case the data are xyz-positions for the degrees of freedom of the object to be controlled, the input statistic may be the mean and/or variance of the xyz-positions and/or the input statistic may be defined as the Gram matrix of the xyz-positions.

According to an embodiment, in case the input motion information comprises or corresponds to data $X_{1:N}$ of a time-series of length N, as described above, the input statistic may be defined as the Gram matrix of the xyz-positions in the following way:

$$G(X_{1:N}^{(vec)}) = \frac{\sum_{i=1}^{N} X_i^{(vec)} X_i^{(vec)^T}}{N}$$

The matrix X is interpreted as a vector of length $k \times 3$, wherein k is the number of degrees of freedom of the object, as outlined already above.

The target statistic is a statistic about the target motion and, thus, about the current motion type and the target style. The target style may be defined by statistical properties of an observed motion according to the target style.

The target statistic may be the mean and/or variance of data, which describe the target motion with the same motion type as the input motion information (current motion type) and a style corresponding to the target style. In case the data are xyz-positions for the degrees of freedom of the object to be controlled, the target statistic maybe the mean and/or variance of the xyz-positions.

According to an embodiment, the target statistic may be the mean of the outer product of the xyz-positions respectively xyz-coordinates of all degrees of freedom across the temporal domain (average similarity of the xyz-positions).

In case the first FFNN is a PPN, the target statistic generated by the PPN may be a Gaussian probability distribution with mean and variance.

In case, the first FFNN is a PNN, the target statistic may correspond to a range respectively distribution, such as a distribution of the mean and/or variance of the xyz-positions for the degrees of freedom, wherein the distribution describes the probability that the motion indicated by the target statistic corresponds to a target motion according to the current motion type and target style.

According to an implementation form of the first aspect, the method comprises the steps of

- predicting, using the first FFNN, on the basis of the input statistic and the target style how one or more statistical values, such as mean and/or variance, of the input statistic have to be changed to transform the input statistic to the target statistic, and

- transforming, using the first FFNN, the input statistic to the target statistic on the basis of the prediction result.

According to an implementation form of the first aspect, the method comprises the steps of

- generating, using a second feedforward neural network (FFNN) of a motion primitive (MP) generator, motion primitives (MPs) according to the target style on the basis of the target statistic, and

- controlling the motion of the object on the basis of the MPs according to the target style.

The second FFNN and MP generator may each be implemented by hardware and/or software.

The first motion statistic module, the style statistic predictor with the first FFNN and the MP generator with the second FFNN may form a motion stylization framework system configured to modify current MPs (according to a current style) to modified MPs according to the target style.

A motion primitive (MP) may be referred to as a basic elementary motion shape. Thus, the MPs of an object represent all possible single motions that may be performed by the object for one specific style (e.g. "happy"). A plurality of MPs according to a specific style create motion of the object, wherein the style of the motion is defined by the specific style of the MPs. The style of the motion may in addition be defined by which of the MPs are activated, that is which of the MPs are performed. In other words, a motion of the object such as "walking" may be created by activating the respective MPs and, thus, the respective single motions that form the motion of walking.

The term "movement primitive" maybe used as a synonym for the term "motion primitive".

The MPs may be stored as data in a matrix G of size r x d, wherein r is the number of MPs and d is the dimension of the MPs. For example, the dimension d of the MPs is 3 in case of the data describing a xyz-position for each degree of freedom or the dimension d of the MPs is 4 in case of the data describing quaternions representing the orientations of the degrees of freedom with regard to a predecessor.

Different representations are possible for the MPs. For example, the MPs may generate one or more xyz-positions for one or more degrees of freedom. Alternatively or additionally, the MPs may generate one or more Euler angles for the orientation of one or more degrees of freedom. Alternatively or additionally, the MPs may generate one or more quaternions for the orientations of one or more degrees of freedom. Alternatively or additionally, the MPs may generate one or more joint angles of one or more degrees of freedom. The representation of the MPs maybe defined on the basis of the control variables of a given object, such as a robot or virtual avatar. Examples of the control variables a given object are one or more Euler angles, quaternions, joint angles and/or xyz-positions of the object.

For example, in case a robot or a virtual avatar is controlled via joint angles (i.e. the control variables of the robot are joint angles), the MPs are used for describing joint angle trajectories of the robot respectively virtual avatar.

The second FFNN may map the target statistic to the parameters of a predefined number of MPs. For a fixed input motion information, the MP generator, in particular the second FFNN, may generate different MPs for different target statistics and, thus, for different target styles. The MP generator may represent the motion manifold (all possible motions an object may perform.

According to an implementation form of the first aspect, the method comprises the step of

- generating, using the second FFNN, the MPs according to the target style on the basis of the input statistic and the target statistic.

The second FFNN may determine on the basis of the input statistic and target statistic the current motion type of the current motion, which is to be stylized to the target style. The second FFNN may determine on the basis of the target statistic the target style. The second FFNN may generate on the basis of the determination results the MPs according to the target style.

The second FFNN may map the input statistic and the target statistic to the parameters of a predefined number of MPs.

According to an implementation form of the first aspect, the method comprises the step of

- modifying, using the second FFNN, MPs according to the current style to the MPs according to the target style on the basis of the target statistic, in particular on the basis of the target statistic and the input statistic.

That is, the second FFNN may modify the current MPs according to the current style, which may be used for generating motion of the current style (such as the current motion of the current motion type and current style) to modified MPs according to the target style on the basis of the target statistic. The modified MPs may be used for generating motion of the target style, such as the target motion of the current motion type and the target style. The target statistic is indicative of the target style.

For example, the current MPs are MPs according to the current style "young", i.e. the current MPs maybe used to create motion of the object of the style "young", such that the motion of the object appears to be performed by a young person. In case the target style is "elderly", the second FFNN may modify the current MPs according to the current style "young" to modified MPs according to the target style "elderly". The modified MPs may be used to create motion of the object of the style "elderly", such that the motion of the object appears to be performed by an elderly person.

For example, the MPs according to the style "young" may generate a motion of the motion type "walking" such that a humanoid robot or virtual avatar walks e.g. with straight back and firm shoulders. As a result of the straight back and the firm shoulders, the walking humanoid robot or virtual avatar appears to be young to a person watching the walking. In contrast, the MPs according to the style "elderly" may generate the motion of the motion type "walking" such that the humanoid robot or virtual avatar walks e.g. with a round back and hanging shoulders. As a result of the round back and the hanging shoulders, the walking humanoid robot or virtual avatar appears to be elderly to a person watching the walking.

According to an embodiment, the second FFNN may modify the current MPs according to the current style to modified MPs according to the target style on the basis of the target statistic and the input statistic.

According to an implementation form of the first aspect, the method comprises the step of

- generating, using a motion generator, the output motion information on the basis of the MPs according to the target style and MP activations.

The motion generator may be implemented by software and/or hardware.

The MP activations define which of the possible single motions represented by the MPs are to be performed respectively activated. Thus, the MP activations define the motion of the object that is created by the single motions represented by the MPs.

Therefore, the MP activation may define which of the possible single motions represented by the MPs are to be performed respectively activated in order that the output motion information describes the target motion of the current motion type and the target style.

In particular, the MP activations may define the motion type of the motion described by the output motion information.

Given the MPs generated by the MP generator and a time-series of MP activations the motion generator may generate the output motion information of the same dimensions as the input motion information.

According to a first embodiment of the first aspect, the method comprises the steps of

- generating, using a loss function module, a loss value on the basis of the input motion information and the output motion information, wherein the loss value is indicative of the difference between the motion type of the output motion information and the motion type of the input motion information, and

- optimizing, using an optimizer, the MP activations on the basis of the loss value.

In particular, the loss function module may determine a difference between the current motion type described by the input motion information and the motion type described by the output motion information on the basis of the input motion information and the output motion information.

The loss function module and the optimizer may be implemented by software and/or hardware.

In particular, the optimizer uses one or more optimization algorithms, such as a gradient descent algorithm, for generating optimized MP activations on the basis of the loss value. The optimizer may be an Adam optimizer.

According to a second embodiment of the first aspect, the method comprises the steps of

- generating, using a loss function module, a loss value on the basis of the input motion information, the output motion information and the target style, wherein the loss value is indicative of the difference between the motion type of the output motion information and the motion type of the input motion information and the difference between the style of the output motion information and the target style, and

- optimizing, using an optimizer, the MP activations on the basis of the loss value.

In particular, the loss function module may determine a difference between the current motion type described by the input motion information and the motion type described by the output motion information on the basis of the input motion information and the output motion information. The loss function module may determine a difference between the style described by the output motion information and the target style.

In particular, the optimizer uses one or more optimization algorithms, such as a gradient descent algorithm, for generating optimized MP activations on the basis of the loss value. The optimizer may be an Adam optimizer.

According to a third embodiment of the first aspect, in case a target statistic is generated, using the first FFNN, on the basis of the input statistic and the target style, the method comprising the steps of

- generating, using a second motion statistic module, an output statistic on the basis of the output motion information,

- generating, using a loss function module, a loss value on the basis of the input motion information, the output motion information, the target statistic and the output statistic, wherein the loss value is indicative of the difference between the motion type of the output motion information and the motion type of the input motion information and the difference between the style of the output motion information and the target style, and

- optimizing, using an optimizer, the MP activations on the basis of the loss value.

In particular, the loss function module may determine a difference between the current motion type described by the input motion information and the motion type described by the output motion information on the basis of the input motion information and the output motion information. The loss function module may determine a difference between the style described by the output motion information and the target style on the basis of the target statistic and the output statistic.

In particular, the optimizer uses one or more optimization algorithms, such as a gradient descent algorithm, for generating optimized MP activations on the basis of the loss value. The optimizer may be an Adam optimizer.

According to an implementation form of the first aspect,

- the steps of generating the output motion information on the basis of the MPs according to the target style and MP activations and the above described steps of the first embodiment of the first aspect, or

- the steps of generating the output motion information on the basis of the MPs according to the target style and MP activations and the above described steps of the second embodiment of the first aspect, or

- the steps of generating the output motion information on the basis of the MPs according to the target style and MP activations and the above described steps of the third embodiment of the first aspect,

are iterated until the loss value is smaller than a threshold value, wherein in the initial iteration the output motion information is generated on the basis of the MPs according to the target style and arbitrary MP activations.

As a result of the iteration of the above described steps until the loss value is smaller than the threshold value, the output motion information generated in the last iteration is close to the input motion information in terms of the motion content. That is, the motion type of the motion described by the output motion information (generated in the last iteration) corresponds to the motion type of the motion described by the input motion information. The output motion information generated in the last iteration is close to the target style in terms of style. That is, the style of the motion described by the output motion information (generated in the last iteration) corresponds to the target style.

The loss function module may reward the similarity of the motion type of the output motion information with the motion type of the input motion information. The loss function module may in addition punish the deviation of the style of the output motion from the target style.

According to an implementation form of the first aspect, the method comprises the steps of

- generating, using the motion generator, a target motion information on the basis of the MPs according to the target style and MP activations, and

- generating, using an inverse and/or forward kinematic module, the output motion information on the basis of the physical limitations of the object, such as one or more joint angles and one or more bone lengths of the object, and the target motion information.

The target motion information describes the target motion of the current motion type and target style. The output motion information generated on the target motion information describes the target motion of the current motion type and target style, while taking into account the physical limitations of the object.

As a result of using the inverse and/or forward kinematic module the method according to the first aspect may directly be used for the control of the motion of the object (robot or virtual avatar), because the physical limitations of the object are taken into account by the inverse and/or forward kinematic module, when generating motion of the object. That is, the inverse and/or forward kinematic module allows to generate physically feasible respectively kinematic aware output motion information of the object.

The inverse and/or forward kinematic module allows to fulfill the physical limitations of the object, such as one or more joint angles, in particular joint limits, and one or more bone lengths of the object, when generating the output motion information.

An inverse kinematic module may find the joint angles of the object to implement the target motion. A forward kinematic module may find the position and orientation of different points from the joint angles of the object.

According to an implementation form of the first aspect, the motion of the object is controlled by controlling one or more control variables, such as one or more euler angles, quaternions, joint angles and/or xyz-positions, of the object.

According to an implementation form of the first aspect, in case one or more xyz-positions are controlled as control variables, the inverse kinematic module is used for generating the output motion information, and in case one or more euler angles, quaternions and/or joint angles are controlled as control variables, the forward kinematic module is used for generating the output motion information.

The forward kinematic module may incorporate one or more joint limits when using one or more joint angles as control variables. The inverse kinematic module may ensure that the physical limitations, such as the bone lengths constraints, of the object are met when using one or more xyz-positions as MP representations.

The inverse kinematic module may be a forward and backward reaching inverse kinematics (FABRIK) module.

In order to achieve the method according to the first aspect, some or all of the above described implementation forms and optional features may be combined with each other.

A second aspect of the present disclosure provides a control unit for controlling motion of an object, such as a robot or virtual avatar, wherein the control unit is configured to perform the method according to the first aspect or any of its implementation forms, as described above.

The control unit comprises a style statistic predictor with a first feedforward neural network (FFNN), wherein the first FFNN is configured to transform an input motion information describing a current motion of a current motion type and current style to an output motion information on the basis of a target style, wherein the output motion information describes a target motion of the current motion type and the target style. The control unit is configured to control the motion of the object on the basis of the output motion information, such that the motion type of the motion of the object corresponds to the current motion type and the style of the motion of the object corresponds to the target style.

The control unit may correspond or comprise a processor, a microprocessor, a controller, a microcontroller, an application specific integrated circuit (ASIC) or any combination of these elements.

The control unit may control the degrees of freedom of the object. For example, in case the object corresponds to a robot comprising an arm with six different joint angles, the six joint angles are six degrees of freedom and may be controlled by the control unit. In particular, the control unit may control the actuators of the object that are responsible for motion of the object.

The first FFNN maybe a probabilistic neural network, PNN.

According to an implementation form of the second aspect, the control unit comprises a first motion statistic module that is configured to generate an input statistic on the basis of the input motion information, wherein the input statistic is indicative of the current motion type and current style. The first FFNN is configured to generate a target statistic on the basis of the input statistic and the target style, wherein the target statistic is indicative of the current motion type and the target style. The control unit is configured to transform the input motion information to the output motion information on the basis of the input statistic and the target statistic.

According to an implementation form of the second aspect, the first FFNN is configured to predict on the basis of the input statistic and the target style how one or more statistical values, such as mean and/or variance, of the input statistic have to be changed to transform the input statistic to the target statistic, and to transform the input statistic to the target statistic on the basis of the prediction result.

According to an implementation form of the second aspect, the control unit comprises a motion primitive (MP) generator with a second feedforward neural network (FFNN), wherein the second FFNN is configured to generate motion primitives (MPs) according to the target style on the basis of the target statistic. The control unit is configured to control the motion of the object on the basis of the MPs according to the target style.

According to an implementation form of the second aspect, the second FFNN is configured to generate the MPs according to the target style on the basis of the input statistic and the target statistic.

According to an implementation form of the second aspect, the second FFNN is configured to modify MPs according to the current style to the MPs according to the target style on the basis of the target statistic, in particular on the basis of the target statistic and the input statistic.

According to an implementation form of the second aspect, the control unit comprises a motion generator, which is configured to generate the output motion information on the basis of the MPs according to the target style and MP activations.

According to a first embodiment of the second aspect, the control unit comprises a loss function module, which is configured to generate a loss value on the basis of the input motion information and the output motion information, wherein the loss value is indicative of the difference between the motion type of the output motion information and the motion type of the input motion information. In addition, the control unit comprises an optimizer, which is configured to optimize the MP activations on the basis of the loss value.

According to a second embodiment of the second aspect, the control unit comprises a loss function module, which is configured to generate a loss value on the basis of the input motion information, the output motion information and the target style, wherein the loss value is indicative of the difference between the motion type of the output motion information and the motion type of the input motion information and the difference between the style of the output motion information and the target style. In addition, the control unit comprises an optimizer, which is configured to optimize the MP activations on the basis of the loss value.

According to a third embodiment of the second aspect, the control unit comprises a second motion statistic module, which is configured to generate an output statistic on the basis of the output motion information, and a loss function module, which is configured to generate a loss value on the basis of the input motion information, the output motion information, the target statistic and the output statistic, wherein the loss value is indicative of the difference between the motion type of the output motion information and the motion type of the input motion information and the difference between the style of the output motion information and the target style. In addition, the control unit comprises an optimizer, which is configured to optimize the MP activations on the basis of the loss value.

According to an implementation form of the second aspect, the control unit is configured to iterate

- generating the output motion information by the motion generator, generating the loss value by the loss function module according to the first embodiment of the second aspect and optimizing the MP activations by the optimizer according to the first embodiment of the second aspect; or

- generating the output motion information by the motion generator, generating the loss value by the loss function module according to the second embodiment of the second aspect and optimizing the MP activations by the optimizer according to the second embodiment of the second aspect; or

- generating the output motion information by the motion generator, generating the loss value by the loss function module according to the third embodiment of the second aspect and optimizing the MP activations by the optimizer according to the third embodiment of the second aspect;

until the loss value is smaller than a threshold value, wherein in the initial iteration the output motion information is generated on the basis of the MPs according to the target style and arbitrary MP activations.

According to an implementation form of the second aspect, the motion generator is configured to generate a target motion information on the basis of the MPs according to the target style and MP activations, and the control unit comprises an inverse and/or forward kinematic module, which is configured to generate the output motion information on the basis of the physical limitations of the object, such as one or more joint angles and one or more bone lengths of the object, and the target motion information.

According to an implementation form of the second aspect, the control unit is configured to control the motion of the object by controlling one or more control variables, such as one or more euler angles, quaternions, joint angles and/or xyz-positions, of the object.

According to an implementation form of the second aspect, in case one or more xyz-positions are controlled as control variables, the inverse kinematic module is used for generating the output motion information and in case one or more euler angles, quaternions and/or joint angles are controlled as control variables, the forward kinematic module is used for generating the output motion information.

The first FFNN, the style statistic predictor, the first motion statistic module, the second FFNN, the MP generator, the motion generator, the loss function module, the optimizer, the second motion statistic module and the inverse and/or forward kinematic module, each may be implemented by software and/or hardware.

The above description with regard to the method according to the first aspect and its implementation forms is also valid for the control unit according to the second aspect and its implementation forms.

In order to achieve the control unit according to the second aspect, some or all of the above-described implementation forms and optional features may be combined with each other.

A third aspect of the present disclosure provides a robot, with a control unit according to the second aspect or any of its implementation forms, as described above.

The robot may be a humanoid robot. The robot may comprise one or more actuators for performing motion according to the one or more degrees of freedom of the robot. The control unit is configured to control the actuators in order to create and control motion of the robot.

The above description with regard to the method of the first aspect and its implementation forms and the above description with regard to the control unit according to the second aspect and its implementation forms is also valid for the robot according to the third aspect.

In order to achieve the robot according to the third aspect, some or all of the above described optional features may be combined with each other.

A fourth aspect of the present disclosure provides a computer program comprising program code for performing the method according to the first aspect or any of its implementation forms.

In particular, the fourth aspect of the present disclosure provides a computer program comprising program code for performing, when implemented on a processor, the method according to the first aspect or any of its implementation forms.

A fifth aspect of the present disclosure provides a computer program product comprising program code for performing when implemented on a processor, a method according to the first aspect or any of its implementation forms.

A sixth aspect of the present disclosure provides a non-transitory storage medium storing executable program code which, when executed by a processor, causes the method according to the first aspect or any of its implementation forms to be performed.

An seventh aspect of the present disclosure provides a computer comprising a memory and a processor, which are configured to store and execute program code to perform a method according to the first aspect or any of its implementation forms.

In the following, the invention is described exemplarily with reference to the enclosed figures, in which

**Figure 1** exemplarily shows an embodiment of a part of a control unit for controlling motion of an object, such as a robot or a virtual avatar.

**Figure 2** exemplarily shows an embodiment of a part of a control unit for controlling motion of an object, such as a robot or a virtual avatar.

**Figure 3** exemplarily shows an embodiment of a part of a control unit for controlling motion of an object, such as a robot or a virtual avatar.

**Figure 4** exemplarily shows an embodiment of a part of a control unit for controlling motion of an object, such as a robot or a virtual avatar.

**Figure 5** exemplarily shows a flow diagram of an embodiment of a method for training the first feedforward neural network (FFNN) of the style statistic predictor used by the method according to the first aspect or any of its implementation forms.

**Figure 6** exemplarily shows a flow diagram of an embodiment of the function of the first feedforward neural network (FFNN) of the style statistic predictor after training, wherein the style statistic predictor is used by the method according to the first aspect or any of its implementation forms.

**Figure 7** exemplarily shows a flow diagram of an embodiment of a method for training the second feedforward neural network (FFNN) of the motion primitive (MP) generator used by implementation forms of the method according to the first aspect.

**Figure 8** exemplarily shows a flow diagram of an embodiment of the function of the second feedforward neural network (FFNN) of the motion primitive (MP) generator after training, wherein the MP generator is used by implementation forms of the method according to the first aspect.

**Figure 9** exemplarily shows a flow diagram of method steps of an optimization process according to an embodiment of implementation forms of the method according to the first aspect.

In the Figures corresponding elements are denoted with identical reference signs.

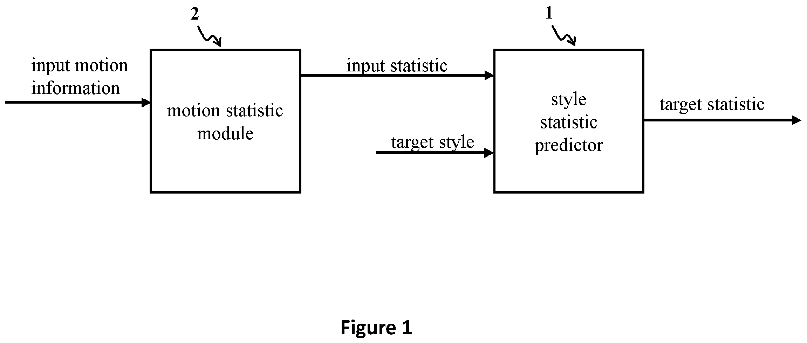

**Figure 1** exemplarily shows an embodiment of a part of a control unit for controlling motion of an object, such as a robot or a virtual avatar.

As shown in Figure 1, a control unit for controlling motion of an object, such as a robot or a virtual avatar, may comprises a style statistic predictor 1 and a motion statistic module 2.

The above description of the method according to the first aspect and its implementation forms with regard to a style statistic predictor and a first motion statistic module and the above description of the control unit according to the second aspect and its implementation forms with regard to a style statistic predictor and a first motion statistic module are correspondingly valid for the style statistic predictor 1 and the motion statistic module 2 of Figure 1. The motion statistic module 2 may be referred to as first motion statistic module.

As shown in Figure 1, the motion statistic module 2 is configured to receive input motion information describing a current motion type and a current style and to generate on the basis of the input motion information an input statistic. The input statistic is indicative of the current motion type and the current style.

The style statistic predictor 1 comprises a feedforward neural network (FFNN), which may be referred to as first FFNN (not shown in Figure 1). The first FFNN maybe a probabilistic neural network (PNN).

The first FFNN is configured to receive an input motion information describing a current motion of a current motion type and current style and receiving a target style for a target motion of the current motion type and the target style. According to the Figure 1, the first FFNN of the style statistic predictor 1 receives the input motion information in the form of the input statistic.

The first FFNN of the style statistic predictor 1 is configured to generate on the basis of the input statistic and the target style a target statistic, which is indicative of the current motion type and the target style. Thus, the target statistics allows to generate an output motion information describing the target motion of the current motion type and the target style.

Therefore, the first FFNN of the style statistic predictor 1 allows a current motion of a robot or virtual avatar, wherein the current motion is of a current motion type and current style, to be stylized to the target style without changing the current motion type.

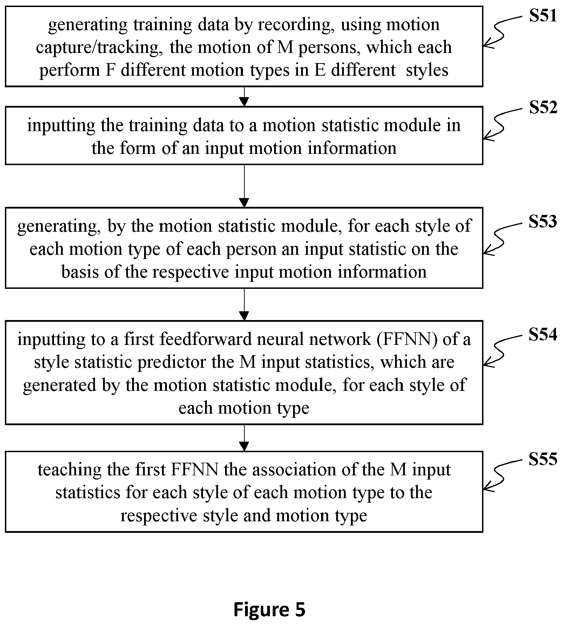

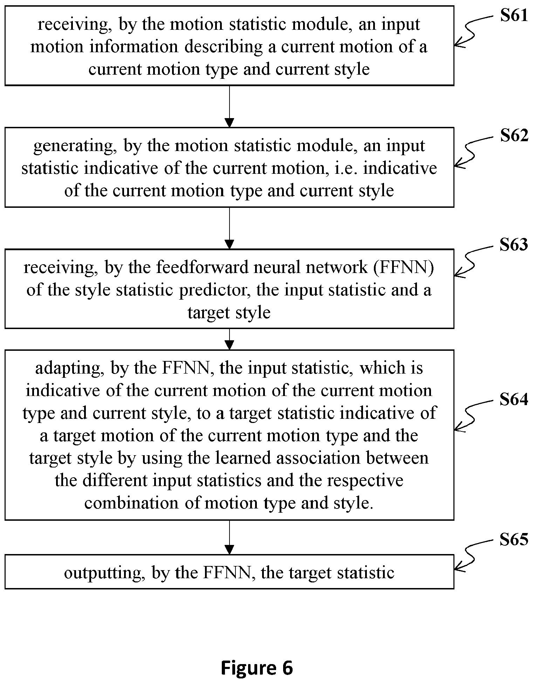

With regard to Figure 5, an embodiment of a method for training the first FFNN of the style statistic predictor 1 is exemplarily described. With regard to Figure 6 an embodiment of the function of the first FFNN of the style statistic predictor 1 after training is exemplarily described.

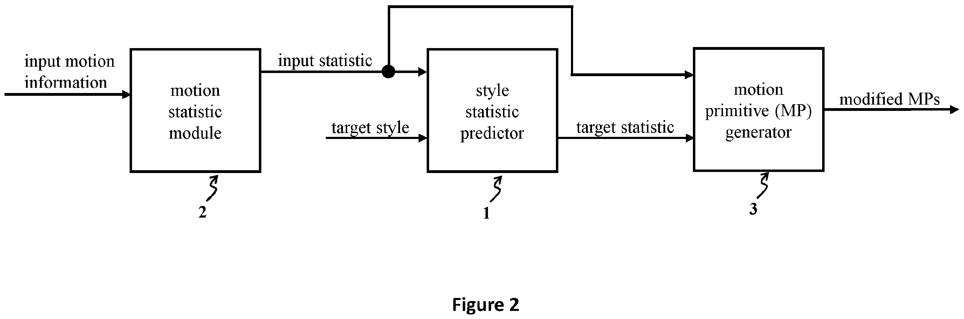

**Figure 2** exemplarily shows an embodiment of a part of a control unit for controlling motion of an object, such as a robot or a virtual avatar.

The part of the control unit according to Figure 2 corresponds to the part of the control unit shown in Figure 1. Therefore, the above description of Figure 1 is also valid for the part of the control unit of Figure 2 and in the following only the differences are discussed. As shown in Figure 2, the control unit comprises besides the motion statistic module 2 and the style statistic predictor 1 with the first FFNN (not shown) a motion primitive (MP) generator 3.

The above description of the method according to the first aspect and its implementation forms with regard to a MP generator and the above description of the control unit according to the second aspect and its implementation forms with regard to a MP generator are correspondingly valid for the MP generator 3 of Figure 2.

The MP generator 3 comprises a feedforward neural network (FFNN), which may be referred to as second FFNN (not shown in Figure 2). The second FFNN is configured to generate motion primitives (MPs) according to the target style on the basis of the target statistic. Preferably, the second FFNN may be configured to generate MPs according to the target style on the basis of the target statistic and the input statistic, as indicated in Figure 2.

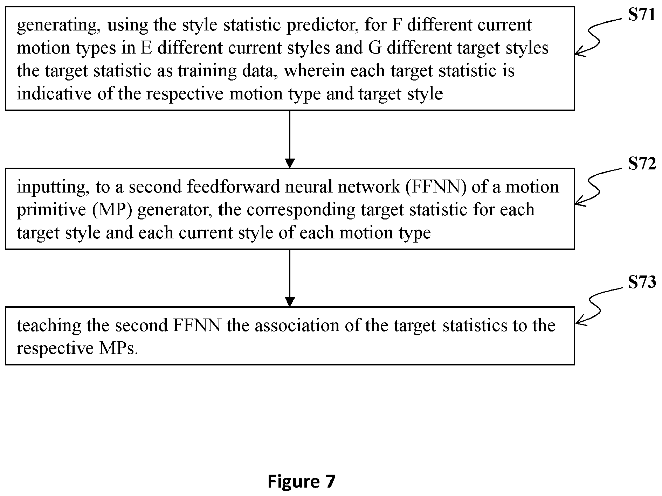

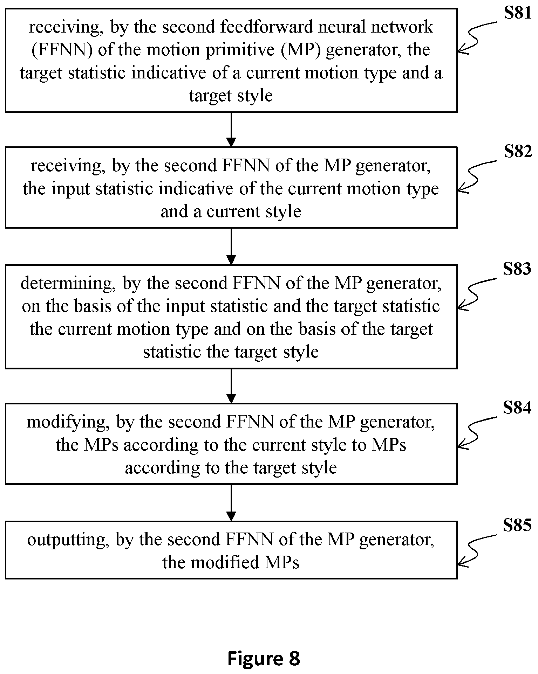

With regard to Figure 7, an embodiment of a method for training the second FFNN of the MP generator 3 is exemplarily described. With regard to Figure 8, an embodiment of the function of the second FFNN of the MP generator 3 after training is exemplarily described.

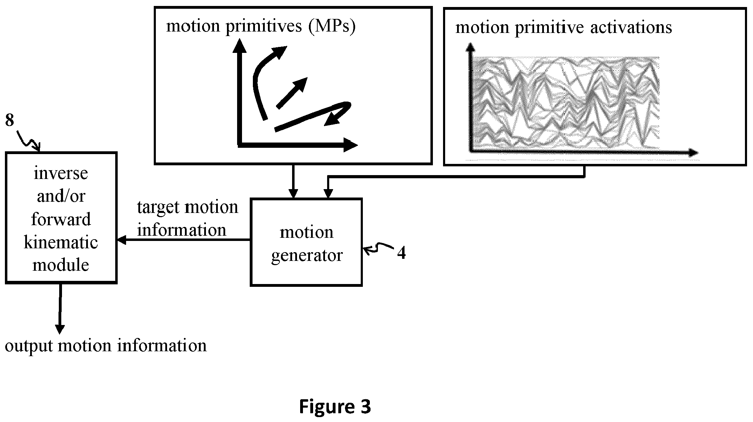

**Figure 3** exemplarily shows an embodiment of a part of a control unit for controlling motion of an object, such as a robot or a virtual avatar.

As shown in Figure 3, a control unit for controlling motion of an object, such as a robot or a virtual avatar, may comprises a motion generator 4 and an inverse and/or forward kinematic module 8.

The above description of the method according to the first aspect and its implementation forms with regard to a motion generator and an inverse and/or forward kinematic module and the above description of the control unit according to the second aspect and its implementation forms with regard to a motion generator and an inverse and/or forward kinematic module are correspondingly valid for the motion generator 4 and the inverse and/or forward kinematic module 8.

The motion generator 4 is configured to generate the output motion information on the basis of motion primitives (MPs) and MP activations. In particular, the motion generator 4 is configured to generate a target motion information on the basis of the MPs and the MP activations. The inverse and/or forward kinematic module 8 is configured to generate the output motion information on the basis of the target motion information and the physical limitations of the object, such as one or more joint angles and one or more bone lengths of the object.

The target motion information may describe the target motion of the current motion type and target style. The output motion information generated on the target motion information may describe the target motion of the current motion type and target style, while taking into account the physical limitations of the object.

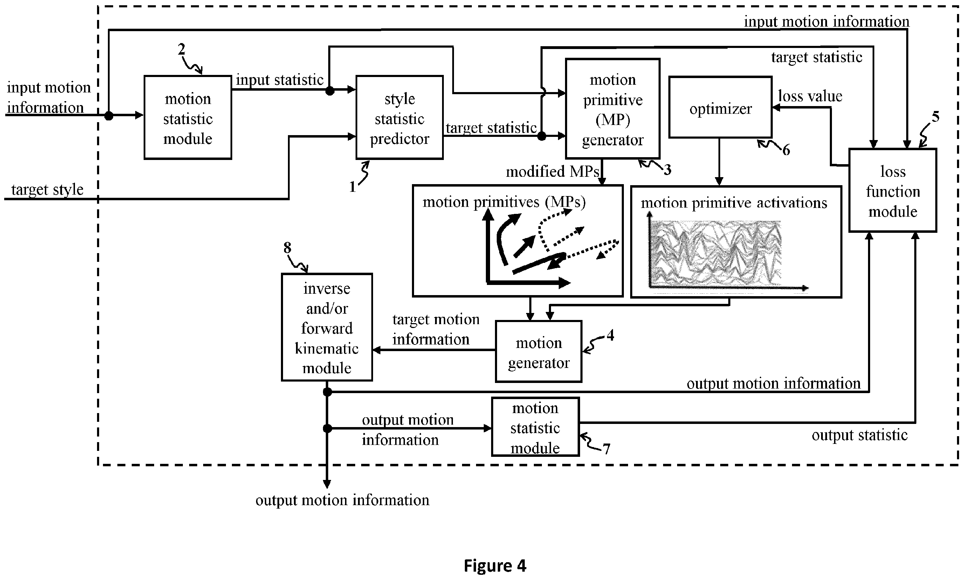

The MPs input to the motion generator 4 for generating the output motion information may correspond to the MP (modified MPs) generated by the MP generator 3 shown in Figure 2. The style of the motion described by the output motion information may be set by the MPs that are generated by an MP generator, such as the MP generator 3 of Figure 2, on the basis of a target statistic that is indicative of the target style. The motion type of the motion described by the output motion information may be set by the MP activations. In order for the output motion information to describe the target motion, i.e. a motion of the current motion type (of the input motion information) and target style, the MP activations may be generated by an optimization process. The elements necessary for such an optimization process are shown in Figure 4.

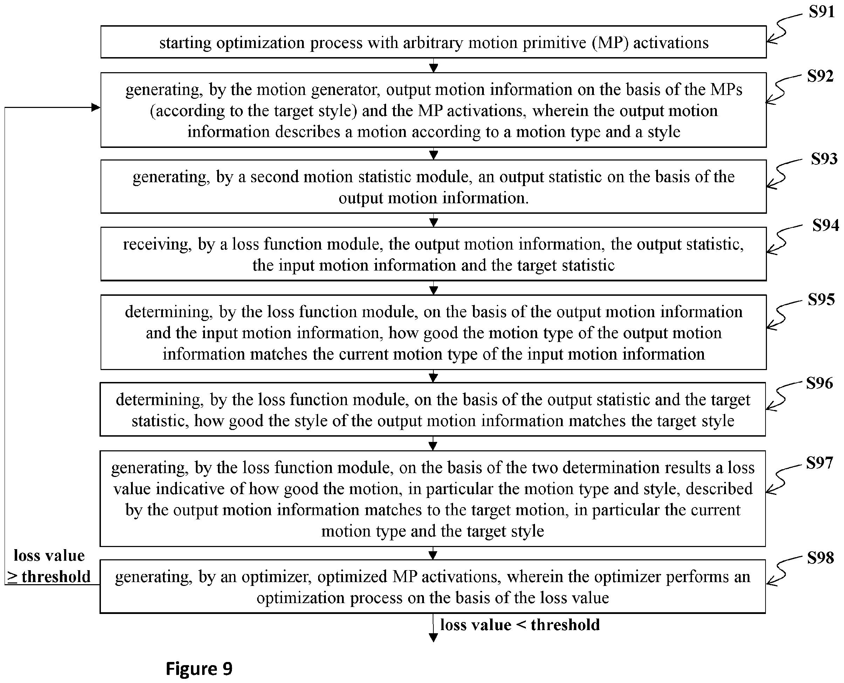

An embodiment of an optimization process that may be performed for generating the MP activations that provide the target motion of the current motion type and target style is exemplarily described with regard to Figure 9.

**Figure 4** exemplarily shows an embodiment of a part of a control unit for controlling motion of an object, such as a robot or a virtual avatar.

The part of the control unit shown in Figure 4 comprises the parts of Figures 2 and 3, wherein the MP generator 3 of Figure 2 provides the MPs to the motion generator 4 of Figure 3. Therefore, the above description of Figures 1 to 3 is also valid for the part of the control unit of Figure 4 and in the following only the differences are discussed. As shown in Figure 4, the control unit comprises besides the elements of Figures 2 and 3 a motion statistic module 7, which may be referred to as second motion statistic module, a loss function module 5 and an optimizer 6.

The above description of the method according to the first aspect and its implementation forms with regard to a second motion statistic module, a loss function module and an optimizer and the above description of the control unit according to the second aspect and its implementation forms with regard to a second motion statistic module, a loss function module and an optimizer are correspondingly valid for the second motion statistic module 7, the loss function module 5 and the optimizer 6.

The second motion statistic module 7 is configured to generate an output statistic on the basis of the output motion information generated by the inverse and/or forward kinematic module 8. The inverse and/or forward kinematic module 8 is an optional element. In case that the inverse and/or forward kinematic module 8 is not present, the target motion information generated by the motion generator 4 is input as output motion information to the second statistic module 7.

In any case, according to Figure 4, the output motion information, the output statistic, the input motion information and the target statistic are input to the loss function module 5.

The loss function module 5 is configured to generate a loss value on the basis of the input motion information and the output motion information, wherein the loss value is indicative of the difference between the motion type of the output motion information and the motion type (current motion type) of the input motion information.

The loss function module 5 maybe configured to generate a loss value on the basis of the output motion information, the output statistic, the input motion information and the target statistic, wherein the loss value is indicative of the difference between the motion type of the output motion information and the motion type (current motion type) of the input motion information and the loss value is indicative of the difference between the style of the output motion information and the target style.

The optimizer 6 is configured to optimize the MP activations on the basis of the loss value. The optimization process carried out by the motion generator 4, the optional inverse and/or forward kinematic module 8, the motion statistic module 7, the loss function module 5 and optimizer 6 is iterated respectively repeated until the loss value generated by the loss function module 5 is smaller than a threshold value. In the initial iteration, the output motion information is generated on the basis of the MPs according to the target style and arbitrary MP activations. The motion generator 4 is configured to generate together or without the inverse and/or forward kinematic module 8 the output motion information on the basis of the MPs and the MP activations, wherein the MPs are generated on the basis of the target statistic by the MP generator 3 and, thus, correspond to MPs according to the target style.

**Figure 5** exemplarily shows a flow diagram of an embodiment of a method for training the first feedforward neural network (FFNN) of the style statistic predictor used by the method according to the first aspect or any of its implementation forms.

As shown in Figure 5, in step S51 training data are generated by recording the motion of a number of M persons (M ≥ 1, preferably M ≥ 10), wherein the M persons each perform F different motion types (F ≥ 1, such as walking, dancing, running, jumping, performing a facial expression, performing a gesture etc.) in E different styles (E ≥ 2, such as a neutral style, young, elderly, happy, angry, sad etc.) using motion capture respectively motion tracking. Preferably, the motion capture respectively motion tracking is carried out by using reflective markers at the body of each person of the M persons.

In step S52 following the step S51, the training data are input to a motion statistic module in the form of input motion information, wherein the input motion information describes the motion of the respective person, when the person moves according to the respective motion type and the respective style. The motion statistic module corresponds to the first motion statistic module used by the method according to implementation forms of the first aspect. In particular, the motion statistic module may be the motion statistic module 2 shown in Figures 1 to 4.

The input motion information may comprise or correspond to data of a matrix $X_{1:N}$ of a time-series of length N. The data are xyz-positions for the degrees of freedom of the object (robot or virtual avatar) to be controlled, wherein the matrix X is of dimension (k × 3) and k is the number of degrees of freedom of the object. That is, for each time point t = 1 to N, the matrix $X_{1:N}$ comprises xyz-positions for the degrees of freedom of the object.

In step S53 following step S52, the motion statistic module generates for each style of each motion type of each person an input statistic on the basis of a respective input motion information describing a motion of the respective person according to the respective motion type and respective style. The input statistic may be the mean and/or variance of the xyz-positions for the degrees of freedom of the respective data $X_{1:N}$. In step S53, for each style of each motion type of each person, an input statistic is generated on the basis of the respective training data. Thus, for each style of each motion type M input statistics are generated.

In step S54 following the step S53, for each style of each motion type the M input statistics originating from the motions of the M different persons according to the respective motion type and style are input to the first feedforward neural network (FFNN) of the style statistic predictor. The first FFNN maybe a probabilistic neural network (PNN). In particular, the first FFNN may be the first FFNN of the style statistic predictor 1 shown in Figures 1 to 4.

In step S55 following the step S54, the association of the M input statistics for each style of each motion type to the respective motion type and style is taught to the first FFNN. This may be done by one or more algorithms allowing to compute the association and/or storing the association in a data storage, preferably in the form of one or more look-up tables, allowing to retrieve the association when needed. As a result, the first FFNN network learns to distinguish between the different input statistics of the different motion types and different styles.

**Figure 6** exemplarily shows a flow diagram of an embodiment of the function of the first feedforward neural network (FFNN) of the style statistic predictor after training, wherein the style statistic predictor is used by the method according to the first aspect or any of its implementation forms. In particular, the first FFNN maybe the first FFNN of the style statistic predictor 1 shown in Figures 1 to 4.

After the training, e.g. according to the method shown in Figure 5, of the first FFNN of the style statistic predictor, the style statistic predictor may generate a target statistic about a target motion of a target style by the following steps:

As shown in Figure 6, in step S61 input motion information describing a current motion of a current motion type, such as "walking", and a current style, such as "happy", is input to a motion statistic module (e.g. the first motion statistic module). In step S62 following step S61, the motion statistic module generates on the basis of the input motion information the corresponding input statistic indicative of the current motion (e.g. a happy walking motion, i.e. a current motion type is "walking" and current style is "happy"). The input statistic is indicative of the current motion type and current style.

In step S63 following step S62, the generated input statistic and a target style, such as "sad", are input into the first FFNN of the style statistic predictor.

In step S64 following step 63, by using the learned association between the different input statistics and the respective combination of motion type and style, the first FFNN adapts or changes the input statistic indicative of the current motion, i.e. the current motion type (e.g. "walking") and the current style (e.g. "happy"), to a target statistic. The target statistic is indicative of a target motion of the same motion type as the current motion (i.e. the current motion type, e.g. "walking"), but indicative of the target style (e.g. "sad") instead of the current style (e.g. "happy").

The target statistic may be e.g. the mean and/or variance of the xyz-positions for the degrees of freedom of the data $X_{1:N}$, which describe a target motion with the same motion type as the input motion information (current motion type) and a style corresponding to the target style.

In case, the first FFNN is a probabilistic neural network (PNN), the target statistic may correspond to a range respectively distribution, such as a distribution of the mean and/or variance of the xyz-positions for the degrees of freedom of the data $X_{1:N}$, wherein the distribution describes the probability that the motion indicated by the target statistic corresponds to a target motion according to the current motion type and target style.

In step S65 following step S64, the first FFNN outputs the target statistic, i.e. the statistic about the target motion of the current motion type and the target style (e.g. a sad walking motion, i.e. the current motion type "walking" and target style "sad").

**Figure 7** exemplarily shows a flow diagram of an embodiment of a method for training the second feedforward neural network (FFNN) of the motion primitive (MP) generator used by implementation forms of the method according to the first aspect.

As shown in Figure 7, in step S71 the style statistic predictor used by the method according to the first aspect or any of its implementation forms generates on the basis of G different target styles (G ≥ 2, such as neutral style, young, elderly, happy, angry, sad etc.) and F different current motion types (F ≥ 1, such as walking, dancing, running, jumping, performing a facial expression, performing a gesture etc.) in E different current styles (E ≥ 1, such as neutral style, young, elderly, happy, angry, sad etc.) the target statistic that is indicative of the respective motion type and target style.

In step S72 following step S71, for each current style of each current motion type and each target style the corresponding target statistic is input to the second feedforward neural network (FFNN) of the motion primitive (MP) generator.

In step S73 following step S72, the association of the target statistics to the respective motion primitives (MPs) is taught to the second FFNN. This may be done by one or more algorithms allowing to compute the association and/or storing the association in a data storage, preferably in the form of one or more look-up tables, allowing to retrieve the association when needed.

As a result, the second FFNN learns to distinguish between the different target statistics of the different motion types and motion styles, and how to modify the MPs, accordingly.

**Figure 8** exemplarily shows a flow diagram of an embodiment of the function of the second feedforward neural network (FFNN) of the motion primitive (MP) generator after training, wherein the MP generator is used by implementation forms of the method according to the first aspect.

After the training of the second FFNN of the MP generator, the MP generator may generate the MPs according to the target style, such that the MPs correspond to basic elementary motion shapes representing all possible single motions that may be performed by the object to generate a motion of the robot in the target style. The motion type is controlled by the motion primitives (MP) activations. The MP activations determine which MPs and, thus, which of the possible single motions of the object are to be performed in order to generate motion of a current motion type. Since the MPs are generated according to the target style, the generated motion of the current motion type is in the target style. The following steps are performed:

As shown in Figure 8, in step S81 the target statistic indicative of the current motion type, such as "walking", and the target style, such as "sad", is input to the second FFNN.

In step S82 following the step S81, the input statistic indicative of the current motion type and the current style, such as "happy", is input to the second FFNN.

In step S83 following the step S82, the second FFNN determines on the basis of the input statistic and the target statistic the current motion type (content of motion) and on the basis of the target statistic the target style to generate MPs for a motion of the current motion type in the target style.

In the step S84 following the step S83, the second FFNN modifies on the basis of the input statistic and target statistic, in particular on the basis of the determined current motion type and determined target style, the MPs according to the current style to MPs according to the target style.

Therefore, in the steps S83 and S84 the second FFNN generates, using the learned association between the different target statistics and the respective MPs, on the basis of the input statistic and the target statistic the MPs according to the target style. The MPs according to the target style are basic elementary motion shapes representing all possible single motions that maybe performed by the object to move according to the target style.

Step S82 is an optional step. Therefore, step S82 maybe omitted and step S81 maybe followed by step S83. In this case, in step S83, the second FFNN determines on the basis of the target statistic the current motion type (content of motion) and on the basis of the target statistic the target style to generate MPs for a motion of the current motion type in the target style. In addition, in step S84 following the step S83, the second FFNN modifies on the basis of the target statistic, in particular on the basis of the determined current motion type and determined target style, the MPs according to the current style to MPs according to the target style.

Therefore in case of the step S83 following the step S81, in the steps S83 and S84 the second FFNN generates, using the learned association between the different target statistics and the respective MPs, on the basis of the target statistic the MPs according to the target style.

In step S85 following the step S84, the second FFNN of the MP generator outputs the MPs according to the target style. These MPs may be referred to as modified MPs.

**Figure 9** exemplarily shows a flow diagram of method steps of an optimization process according to an embodiment of implementation forms of the method according to the first aspect.

As shown in Figure 9, in step S91, the optimization process is started with arbitrary motion primitive (MP) activations after the MPs have been generated for the target style. These MPs may be referred to as modified MPs or MPs according to the target style.

In step S92 following step S91, the motion generator used by implementation forms of the method according to the first aspect generates on the basis of the MPs according to the target style and the MP activations output motion information that describes a motion according to a motion type (set by the MP activations) and a style, which should correspond to the target style (set by the MPs and MP activations).

In step S93 following step S92, the motion statistic module (second motion statistic module) used by implementation forms of the method according to the first aspect generates on the basis of the generated output motion information an output statistic, such as the mean and/or variance of the data of the output motion information.

In step S94 following step S93, the output motion information, the output statistic, the input motion information and the target statistic are input into the loss function module used by implementations forms of the method according to the first aspect.

In step S95 following step S94, the loss function module determines on the basis of the output motion information and the input motion information, how good the motion type of the output motion information matches the current motion type of the input motion information. That is, the loss function module determines the extend of difference between the motion type of the output motion information and the current motion type of the input motion information.

Additionally, in step S96 following the step S95, the loss function module determines on the basis of the output statistic and the target statistic, how good the style of the output motion information matches the target style. That is, the loss function module determines the extend of difference between the style of the output motion information and the target style.

In step S97 following the step S96, the loss function module generates on the basis of the two determined differences with regard to the motion type and style a loss value which is used by an optimizer to generate optimized MP activations. The loss value is indicative of how good the motion, in particular the motion type and style, described by the output motion information matches to the target motion, in particular to the current motion type and the target style.

The steps S93 and S96 are optionally steps. They may be omitted. In such a case, the step S94 follows after the step S92, wherein in step S94 the output motion information and the input motion information are input into the loss function module. In addition, the step S95 follows after the step S94 and the step S97 may follow after the step S95, wherein in the step S97 the loss function module generates on the basis of the determined difference with regard to the motion type a loss value which is used by the optimizer to generate optimized MP activations. The loss value is indicative of how good the motion, in particular the motion type, described by the output motion information matches to the target motion, in particular to the current motion type.

In step S98 following the step S97, the optimizer generates the optimized MP activations on the basis of the loss value. The optimizer may use one or more optimization algorithms, such as a gradient descent algorithm, for generating the optimized MP activations on the basis of the loss value.

In case the loss value is smaller than a threshold value, the difference between the motion described by the output motion information and the target motion is sufficient low and, thus, the optimization process is ended after step S98. That is, in case the loss value is smaller than the threshold value, the difference between the motion type of the output motion information and the current motion type of the input motion information is sufficient low. Thus, the motion type of the output motion information sufficiently matches the current motion type of the input motion information. Moreover, in case the loss value is smaller than the threshold value, the difference between the style of the output motion information and the target style is sufficient low. That is, the style of the output motion information sufficiently matches the target style.

In case the loss value is equal or greater than the threshold value, the method returns after step S98 to step S92 again. That is, the steps S92 to S98 are iterated. The steps S92 to S98 are iterated until the loss value is smaller than the threshold value.

**Claims**

1. A method for controlling motion of an object, such as a robot or virtual avatar, the method comprising the steps of

   - receiving an input motion information describing a current motion of a current motion type and current style, and a target style for a target motion of the current motion type and the target style,
   - transforming, using a first feedforward neural network, FFNN, of a style statistic predictor (1), the input motion information to an output motion information on the basis of the target style, wherein the output motion information describes the target motion,
   - controlling the motion of the object on the basis of the output motion information, such that the motion type of the motion of the object corresponds to the current motion type and the style of the motion of the object corresponds to the target style.

2. The method according to claim 1, wherein

   - the first FFNN is a probabilistic neural network, PNN.

3. The method according to claim 1 or 2, the method comprising the steps of

   - generating, using a first motion statistic module (2), an input statistic on the basis of the input motion information, wherein the input statistic is indicative of the current motion type and current style,
   - generating, using the first FFNN, a target statistic on the basis of the input statistic and the target style, wherein the target statistic is indicative of the current motion type and the target style, and
   - transforming the input motion information to the output motion information on the basis of the input statistic and the target statistic.

4. The method according to claim 3, the method comprising the steps of

   - predicting, using the first FFNN, on the basis of the input statistic and the target style how one or more statistical values, such as mean and/or variance, of the input statistic have to be changed to transform the input statistic to the target statistic, and
   - transforming, using the first FFNN, the input statistic to the target statistic on the basis of the prediction result.

5. The method according to claim 3 or 4, the method comprising the steps of

   - generating, using a second feedforward neural network, FFNN, of a motion primitive, MP, generator (3), MPs according to the target style on the basis of the target statistic, and
   - controlling the motion of the object on the basis of the MPs according to the target style.

6. The method according to claim 5, the method comprising the step of

   - generating, using the second FFNN, the MPs according to the target style on the basis of the input statistic and the target statistic.

7. The method according to claim 5 or 6, the method comprising the step of

   - modifying, using the second FFNN, MPs according to the current style to the MPs according to the target style on the basis of the target statistic, in particular on the basis of the target statistic and the input statistic.

8. The method according to any one of claims 3 to 7, the method comprising the step of

   - generating, using a motion generator (4), the output motion information on the basis of the MPs according to the target style and MP activations.

9. The method according to claim 8, the method comprising the steps of

   - generating, using a loss function module (5), a loss value on the basis of the input motion information and the output motion information, wherein the loss value is indicative of the difference between the motion type of the output motion information and the motion type of the input motion information, and
   - optimizing, using an optimizer (6), the MP activations on the basis of the loss value.

10. The method according claim 8, the method comprising the steps of

    - generating, using a loss function module (5), a loss value on the basis of the input motion information, the output motion information and the target style, wherein the loss value is indicative of the difference between the motion type of the output motion information and the motion type of the input motion information and the difference between the style of the output motion information and the target style, and
- optimizing, using an optimizer (6), the MP activations on the basis of the loss value.

**11.** The method according to claim 8, when depending on claim 3, the method comprising the steps of

- generating, using a second motion statistic module (7), an output statistic on the basis of the output motion information,
- generating, using a loss function module (5), a loss value on the basis of the input motion information, the output motion information, the target statistic and the output statistic, wherein the loss value is indicative of the difference between the motion type of the output motion information and the motion type of the input motion information and the difference between the style of the output motion information and the target style, and
- optimizing, using an optimizer (6), the MP activations on the basis of the loss value.

**12.** The method according to any one of claims 9 to 11,

- wherein the steps of claims 8 and 9, or 8 and 10, or 8 and 11 are iterated until the loss value is smaller than a threshold value, wherein in the initial iteration the output motion information is generated on the basis of the MPs according to the target style and arbitrary MP activations.

**13.** The method according to any one of claims 8 to 12, the method comprising the steps of

- generating, using the motion generator (4), a target motion information on the basis of the MPs according to the target style and MP activations, and
- generating, using an inverse and/or forward kinematic module (8), the output motion information on the basis of the physical limitations of the object, such as one or more joint angles and one or more bone lengths of the object, and the target motion information.

**14.** The method according to any one of the previous claims, wherein

- the motion of the object is controlled by controlling one or more control variables, such as one or more euler angles, quaternions, joint angles and/or xyz-positions, of the object.

**15.** The method according to claim 14, when depending on claim 13, wherein

- in case one or more xyz-positions are controlled as control variables, the inverse kinematic module (8) is used for generating the output motion information, and
- in case one or more euler angles, quaternions and/or joint angles are controlled as control variables, the forward kinematic module (8) is used for generating the output motion information.

**16.** A control unit for controlling a motion of an object, such as a robot or virtual avatar, wherein

- the control unit is configured to perform the method according to any one of the previous claims.

**17.** A robot, with

- a control unit according to claim 16 that is configured to control a motion of the robot.

**18.** A computer program comprising program code for performing, when implemented on a processor, a method according to any one of claims 1 to 15.

**Figure 1**

EP 3 933 698 A1

**Figure 2**

**Figure 3**

**Figure 4**

```
┌─────────────────────────────────────────────┐
│ generating training data by recording, using motion    │ ⟋ S51
│ capture/tracking, the motion of M persons, which each   │
│ perform F different motion types in E different styles   │
└─────────────────────────────────────────────┘
                       │
                       ▼
┌─────────────────────────────────────────────┐
│ inputting the training data to a motion statistic module in │ ⟋ S52
│        the form of an input motion information         │
└─────────────────────────────────────────────┘
                       │
                       ▼
┌─────────────────────────────────────────────┐
│ generating, by the motion statistic module, for each style of │ ⟋ S53
│   each motion type of each person an input statistic on the   │
│       basis of the respective input motion information        │
└─────────────────────────────────────────────┘
                       │
                       ▼
┌─────────────────────────────────────────────┐
│ inputting to a first feedforward neural network (FFNN) of a │ ⟋ S54
│   style statistic predictor the M input statistics, which are   │
│  generated by the motion statistic module, for each style of   │
│                      each motion type                          │
└─────────────────────────────────────────────┘
                       │
                       ▼
┌─────────────────────────────────────────────┐
│ teaching the first FFNN the association of the M input  │ ⟋ S55
│   statistics for each style of each motion type to the    │
│           respective style and motion type               │
└─────────────────────────────────────────────┘
```

**Figure 5**

receiving, by the motion statistic module, an input motion information describing a current motion of a current motion type and current style — S61

generating, by the motion statistic module, an input statistic indicative of the current motion, i.e. indicative of the current motion type and current style — S62

receiving, by the feedforward neural network (FFNN) of the style statistic predictor, the input statistic and a target style — S63

adapting, by the FFNN, the input statistic, which is indicative of the current motion of the current motion type and current style, to a target statistic indicative of a target motion of the current motion type and the target style by using the learned association between the different input statistics and the respective combination of motion type and style. — S64

outputting, by the FFNN, the target statistic — S65

**Figure 6**

generating, using the style statistic predictor, for F different current motion types in E different current styles and G different target styles the target statistic as training data, wherein each target statistic is indicative of the respective motion type and target style — S71

inputting, to a second feedforward neural network (FFNN) of a motion primitive (MP) generator, the corresponding target statistic for each target style and each current style of each motion type — S72

teaching the second FFNN the association of the target statistics to the respective MPs. — S73

Figure 7

```
┌─────────────────────────────────────────────┐         S81
│  receiving, by the second feedforward        │╱
│  neural network (FFNN) of the motion         │
│  primitive (MP) generator, the               │
│  target statistic indicative of a current    │
│  motion type and a target style              │
└─────────────────────────────────────────────┘
                      │
                      ▼
┌─────────────────────────────────────────────┐         S82
│  receiving, by the second FFNN of the        │╱
│  MP generator, the input statistic           │
│  indicative of the current motion type       │
│  and a current style                         │
└─────────────────────────────────────────────┘
                      │
                      ▼
┌─────────────────────────────────────────────┐         S83
│  determining, by the second FFNN of the      │╱
│  MP generator, on the basis of the input     │
│  statistic and the target statistic the      │
│  current motion type and on the basis of     │
│  the target statistic the target style       │
└─────────────────────────────────────────────┘
                      │
                      ▼
┌─────────────────────────────────────────────┐         S84
│  modifying, by the second FFNN of the        │╱
│  MP generator, the MPs according to the      │
│  current style to MPs according to the       │
│  target style                                │
└─────────────────────────────────────────────┘
                      │
                      ▼
┌─────────────────────────────────────────────┐         S85
│  outputting, by the second FFNN of the       │╱
│  MP generator, the modified MPs              │
└─────────────────────────────────────────────┘
```

**Figure 8**

```
┌─────────────────────────────────────────────────────────────────────┐  S91
│    starting optimization process with arbitrary motion primitive (MP) activations │
└─────────────────────────────────────────────────────────────────────┘
                                    ↓
┌─────────────────────────────────────────────────────────────────────┐  S92
│  generating, by the motion generator, output motion information on the basis of the MPs │
│   (according to the target style) and the MP activations, wherein the output motion │
│        information describes a motion according to a motion type and a style │
└─────────────────────────────────────────────────────────────────────┘
                                    ↓
┌─────────────────────────────────────────────────────────────────────┐  S93
│   generating, by a second motion statistic module, an output statistic on the basis of the │
│                         output motion information. │
└─────────────────────────────────────────────────────────────────────┘
                                    ↓
┌─────────────────────────────────────────────────────────────────────┐  S94
│  receiving, by a loss function module, the output motion information, the output statistic, │
│              the input motion information and the target statistic │
└─────────────────────────────────────────────────────────────────────┘
                                    ↓
┌─────────────────────────────────────────────────────────────────────┐  S95
│  determining, by the loss function module, on the basis of the output motion information │
│        and the input motion information, how good the motion type of the output motion │
│       information matches the current motion type of the input motion information │
└─────────────────────────────────────────────────────────────────────┘
                                    ↓
┌─────────────────────────────────────────────────────────────────────┐  S96
│  determining, by the loss function module, on the basis of the output statistic and the target │
│      statistic, how good the style of the output motion information matches the target style │
└─────────────────────────────────────────────────────────────────────┘
                                    ↓
┌─────────────────────────────────────────────────────────────────────┐  S97
│  generating, by the loss function module, on the basis of the two determination results a loss │
│  value indicative of how good the motion, in particular the motion type and style, described │
│      by the output motion information matches to the target motion, in particular the current │
│                        motion type and the target style │
└─────────────────────────────────────────────────────────────────────┘
   loss value                      ↓
  ≥ threshold ┌───────────────────────────────────────────────────────────┐  S98
              │  generating, by an optimizer, optimized MP activations, wherein the optimizer performs an │
              │              optimization process on the basis of the loss value │
              └───────────────────────────────────────────────────────────┘
                                    ↓  loss value < threshold
                                    ↓
```

Figure 9

Europäisches
Patentamt

European
Patent Office

Office européen
des brevets

# EUROPEAN SEARCH REPORT

**Application Number**

EP 20 18 3933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KFIR ABERMAN ET AL: "Unpaired Motion Style Transfer from Video to Animation", ARXIV.ORG, CORNELL UNIVERSITY LIBRARY, 201 OLIN LIBRARY CORNELL UNIVERSITY ITHACA, NY 14853, 12 May 2020 (2020-05-12), XP081671347, DOI: 10.1145/3386569.3392469 * page 3 - page 11 * | 1-18 | INV. G06N3/00 G06N3/04 B25J9/00 |
| X | ZHOU ALLAN ET AL: "Cost Functions for Robot Motion Style", 2018 IEEE/RSJ INTERNATIONAL CONFERENCE ON INTELLIGENT ROBOTS AND SYSTEMS (IROS), IEEE, 1 October 2018 (2018-10-01), pages 3632-3639, XP033491702, DOI: 10.1109/IROS.2018.8594433 [retrieved on 2018-12-27] * page 3633 - page 3636 * | 1-18 | |
| X | ZHOU DONGSHENG ET AL: "3D Human Motion Synthesis Based on Convolutional Neural Network", IEEE ACCESS, vol. 7, 20 May 2019 (2019-05-20), pages 66325-66335, XP011728381, DOI: 10.1109/ACCESS.2019.2917609 [retrieved on 2019-06-03] * page 66327 - page 66334 * | 1-18 | TECHNICAL FIELDS SEARCHED (IPC)  G06N B25J |

The present search report has been drawn up for all claims

| Place of search | Date of completion of the search | Examiner |
|---|---|---|
| The Hague | 22 January 2021 | Jacobs, Jan-Pieter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)